# EUROPÄISCHE PATENTSCHRIFT

(11) **EP 3 548 368 B1**
(45) Veröffentlichungstag und Bekanntmachung des Hinweises auf die Patenterteilung: **29.09.2021**
(21) Anmeldenummer: 17826143.4
(22) Anmeldetag: 28.11.2017
(51) Int. Cl.: B60T 7/20, B60T 13/58, F16D 61/00, B60L 7/00, B62D 59/04, B60T 1/10, B60K 7/00, B60L 7/14, B60L 7/18, B60L 7/26, B60L 9/16, B60L 15/20

(54) **SATTELAUFLIEGER, SATTELZUG UND VERFAHREN ZUM BREMSEN EINES SATTELAUFLIEGERS**
SEMITRAILER, LORRY AND METHOD OF BRAKING A SEMITRAILER
SEMI-REMORQUE, CAMION ET PROCÉDÉ DE FREINAGE D'UNE SEMI-REMORQUE

(30) Priorität: 02.12.2016 DE 102016123350
(43) Veröffentlichungstag der Anmeldung: 09.10.2019
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2017/080580
(87) Internationale Veröffentlichungsnummer: WO 2018/099878

(56) Entgegenhaltungen:
- EP-A1- 2 570 290
- EP-A1- 2 651 678
- DE-A1-102004 029 661
- DE-A1-102008 001 565
- DE-A1-102012 022 006
- DE-T2- 60 114 140
- DE-U1-202005 020 065
- FR-A- 3 023 533
- US-A1- 2004 122 579
- US-A1- 2006 000 207
- US-A1- 2007 193 795
- US-A1- 2008 174 174
- US-A1- 2011 042 154
- US-A1- 2011 094 807
- US-A1- 2016 318 421
- US-A1- 2016 318 421
- Mack Murray: "Kinetic Energy Recovery for Trucks", , 7 July 2016 (2016-07-07), XP055667092, Retrieved from the Internet: URL:https://ecosummit.net/uploads/20160707 -1205-Mack-Murray-Adgero.pdf [retrieved on 2020-02-10]
- Anonymous: "LKW-Bremsanlage - Wikipedia", , 10 July 2015 (2015-07-10), XP055704837, Retrieved from the Internet: URL:https://web.archive.org/web/2015071010 0323/https://de.wikipedia.org/wiki/LKW-Bre msanlage [retrieved on 2020-06-15]

## Beschreibung

Die vorliegende Erfindung betrifft einen Sattelauflieger und einen Sattelzug.

Sattelzüge mit einer Sattelzugmaschine und einem Sattelauflieger bzw. Trailer sind aus dem Stand der Technik hinlänglich bekannt. Typischerweise wird hierbei der Sattelauflieger durch die Sattelzugmaschine, in die ein Antrieb integriert ist, gezogen. Darüber hinaus sind Sattelzüge bekannt, deren Sattelauflieger einen eigenen Antrieb aufweisen. Hierzu weisen die Sattellaufleger vorzugsweise radindividuelle Antriebvorrichtungen, beispielsweise in Gestalt von elektrischen Maschinen, auf. Allerdings erwiesen sich diese System aus dem Rad einerseits und der radindividuellen Antriebsvorrichtung andererseits in nachteilhafter Weise als bauraumfüllend, insbesondere in solchen Fällen, in denen zusätzlich ein Getriebe vorgesehen ist. Die bauraumfüllenden Systeme aus Rad und Antriebsvorrichtung reduzieren dabei insbesondere einen möglichen Stauraum für den Sattelauflieger.

Die US 2016/0318421 A1 betrifft eine Energiekontrolleinheit mit einer Batterie, einem Motor und einer Datenlogikanalysiereinheit, welche bestimmte variable Konditionen des Transports interpretieren kann.

Die WO 2012/080738 A1 betrifft eine Zugeinheit und eine Anhängereinheit, welche durch einen Verbindungsstift miteinander verbunden sind, wobei der Verbindungsstift eine Sensorvorrichtung zum Erfassen von auf den Verbindungsstift ausgeübten Belastungen aufweist und über eine elektrische Bewegungsmaschine verfügt, die fähig ist, elektrisch angetrieben zu werden, um Rad anzutreiben.

Die US 2008/0174174 A1 betrifft ein Bremsregenerations- und Antriebssystem für einen passiven Sattelauflieger.

Die DE 20 2005 020 065 U1 befasst sich mit Rangierhilfseinrichtungen für Fahrzeuganhänger.

Die FR 3 023 533 A zeigt eine Vorrichtung zur Hybridisierung eines Sattelaufliegers. Die Vorrichtung bezieht sich auf die Hybridisierung eines Sattelzugfahrzeugs durch die Integration einer Vorrichtung zur Rückgewinnung von Energie aus Bremsen und Elektromotorisierung in den Anhängerteil, die durch Anweisungen gesteuert wird, die vom Bordcomputer des Zugfahrzeugs kommen.
Die US 2004/122579 A1 betrifft ein koordiniertes Bremssteuersystem für ein Hybridbremssystem, das eine regenerative Bremseinheit und eine Reibungsbremseinheit für ein Fahrzeug umfasst, und welches so angeordnet ist, dass es ein Gesamtbremsmoment erzeugt, das eine Kombination aus einem von der regenerativen Bremseinheit erzeugten regenerativen Bremsmoment und ein Reibungsbremsmoment, das von der Reibungsbremseinheit erzeugt wird, um das Gesamtbremsmoment näher an ein Zielbremsmoment heranzuführen und eine Änderungsrate des regenerativen Bremsmoments gemäß einer Reaktionsverzögerung des Reibungsbremsmoments zu begrenzen.

Die EP 2 570 290 A1 bezieht sich auf ein Antriebssystem eines batteriebetriebenen Fahrzeugs mit einer permanent erregten Synchronmaschine, deren ständerseitige Anschlüsse mit wechselspannungsseitigen Anschlüssen eines selbstgeführten Stromrichters elektrisch leitend verbunden sind, und mit einer Vorrichtung zum gesteuerten Kurzschließen der ständerseitigen Anschlüsse der permanent erregten Synchronmaschine.

Es ist eine Aufgabe der vorliegenden Erfindung, einen Sattelauflieger bereitzustellen, der gegenüber dem Stand der Technik, insbesondere in Hinblick auf dessen Raumbedarf für die Antriebsvorrichtung und das Rad, verbessert ist.

Diese Aufgabe wird gelöst durch einen Sattelauflieger gemäß Anspruch 1 und mit einem Sattelzug gemäß Anspruch 7. Weitere Vorteile und Merkmale der Erfindung ergeben sich aus den Unteransprüchen sowie der Beschreibung und der beigefügten Figur.

Erfindungsgemäß ist ein Sattelauflieger, insbesondere für ein bzw. eines Nutzfahrzeugs vorgesehen, umfassend ein Rad und eine elektrische Maschine zum Antrieb des Rads, wobei die elektrische Maschine derart konfiguriert ist, dass sie in einem Bremszustand als elektromotorische Bremse wirkt bzw. betreibbar ist. Gegenüber dem Stand der Technik gestattet es die erfindungsgemäß als elektromotorische Bremse betriebene elektrische Maschine in vorteilhafter Weise, auf eine Bremsvorrichtung, insbesondere eine mechanische Bremsvorrichtung zu verzichten. Dadurch lässt sich Bauraum sparen und das System aus Rad und elektrischer Maschine für einen möglichst großen Stauraum im Sattelauflieger entsprechend klein dimensionieren. Alternativ kann der entstandene Bauraum zusätzlichen Bauteilen, wie z. B. einem Getriebe, zur Verfügung gestellt werden. Insbesondere erweist es sich als vorteilhaft, dass die Integration der elektrischen Maschine in den Sattelauflieger, insbesondere an ein Fahrwerk des Sattelaufliegers, vereinfacht ist gegenüber solchen Systemen mit einer zusätzlichen Bremsvorrichtung. Außerdem bedarf es keiner aufwendigen Demontage der gesamten elektrischen Maschine, die andernfalls bei einem Austauschen von Verschleißteilen der Bremsvorrichtung, beispielsweise einer Bremsscheibe, regelmäßig erforderlich wäre. Folge ist, dass in vorteilhafter Weise aufwendige und komplizierte Serviceschritte entfallen, für die besonders geschultes Personal nötig wäre. Der Verzicht auf eine Bremsvorrichtung wirkt sich zudem positiv auf das Gesamtgewicht und die Kosten des Sattelzuges aus. Weiterhin ist es vorstellbar, dass die elektrische Maschine zum bedarfsabhängigen Antrieb vorgesehen ist. D. h. die elektrische Maschine ist derart konfiguriert, dass sie zwischen einem Fahrbetrieb, in dem die elektrische Maschine das Rad antreibt, einem Bremsbetrieb, in dem die elektrische Maschine das Rad abbremst und einem Leerlaufbetrieb, in dem die elektrische Maschine entkoppelt ist vom Rad, wechseln bzw. gewechselt werden kann, insbesondere bedarfsabhängig bzw. gesteuert wechseln kann. Dadurch kann ein Fahrzeugführer beispielsweise bestimmen, in welcher Situation die elektrische Maschine im Leerlaufbetrieb oder im Fahrbetrieb betrieben werden soll. Die elektrische Maschine wird insbesondere zum Bremsen des Sattelaufliegers aktiviert, wenn sich der Sattelauflieger bewegt. Als Beispiel, um die Erfindung zu verstehen ist, auch vorstellbar, dass das durch elektrische Maschine angetriebene Rad eine zusätzliche Bremsvorrichtung, beispielsweise eine mechanische Bremsvorrichtung umfasst, die ausschließlich zum Feststellen des Rads in einem Parkbetrieb, d. h in einem Zustand, in dem der Sattelauflieger abgestellt ist, betätigbar ist. In einer solchen Ausführungsform lässt sich in vorteilhafter Weise die Anzahl der zum Wechsel von Verschleißteilen erforderlichen Demontagen der elektrischen Maschinen reduzieren, da die Bremsvorrichtung weniger belastet wird und entsprechend die Zeit zwischen zwei Verschleißteilwechseln größer wird. Beispielsweise ist die mechanische Bremse eine Scheibenbremse. Insbesondere ist es vorgesehen, dass das Rad mit einem rotierbaren Teil bzw. einem Rotor der elektrischen Maschine mittelbar oder unmittelbar verbunden ist.

Gemäss der Erfindung ist es vorgesehen, dass die elektrische Maschine derart konfiguriert ist, dass sie als alleinige Bremsvorrichtung für das Rad und/oder die Achse dient bzw. fungiert, d. h. keine zusätzliche bzw. weitere Bremsvorrichtung am Rad bzw. an der Achse vorgesehen ist. Dadurch wird nicht ausgeschlossen, dass an anderen Achsen bzw. Rädern, insbesondere antriebslosen Rädern, eine Bremsvorrichtung, beispielsweise eine mechanische oder hydraulische Bremsvorrichtung, vorgesehen ist. Das mit der elektrischen Maschine angetriebene Rad bzw. die angetriebene Achse ist zweckmäßigerweise bremsvorrichtungsfrei. Dadurch wirkt ausschließlich die elektrische Maschine als Bremsvorrichtung.

Gemäß einer weiteren Ausführungsform der vorliegenden Erfindung ist vorgesehen, dass die elektrische Maschine eine Asynchronmaschine oder eine Synchronmaschine ist. Im Fahrbetrieb wird die elektrische Maschine dabei so angesteuert, dass ein Rotor der elektrischen Maschine gegenüber einem Stator rotiert. Hierzu werden insbesondere in die elektrische Maschinen integrierte Spulen gezielt, d. h. phasenversetzt zueinander, mit einem Strom beaufschlagt.

Zweckmäßig ist es vorgesehen, dass die elektrische Maschine derart ausgebildet ist, dass der Asynchronmotor oder der Synchronmotor zum Bremsen in einen Generatorbetrieb überführbar ist. Die im Generatorbetrieb betriebene elektrische Maschine lässt den Rotor gegenüber dem Stator abbremsen, wodurch einer Rotation des mit dem Rotor verbundenen Rads auf vorteilhafter Weise entgegengewirkt wird.

Vorzugsweise ist es vorgesehen, dass die elektrische Maschine im Bremszustand als Rekuperationsbremse wirkt bzw. betreibbar ist. Dadurch lässt sich beim Bremsen des Sattelaufliegers elektrische Energie zurückgewinnen. Hierzu umfasst der Sattelauflieger vorzugsweise eine Energiespeicherzelle, die insbesondere elektrisch leitend mit der elektrischen Maschine verbunden ist. Die in der Energiespeicherzelle gespeicherte elektrische Energie lässt sich dann beispielsweise wieder im Fahrbetrieb zum Antrieb oder zur Versorgung weiterer Bauteile des Sattelaufliegers, wie z. B einer Lichtanlage des Sattelaufliegers, nutzen.

In einer weiteren Ausführungsform der vorliegenden Erfindung ist vorgesehen, dass die elektrische Maschine an das Rad angrenzt oder eine Achse mit zwei, vorzugsweise gegenüberliegenden Rädern antreibt. Unter einer angrenzenden Anordnung der elektrischen Maschine am Rad ist insbesondere eine solche zu verstehen, bei der ein Abstand zwischen dem angetriebenen Rad und der elektrischen Maschine im Wesentlichen einem Wert zwischen 2 % und 35 %, bevorzugt einem Wert zwischen 5 % und 15 % und besonders bevorzugt einem Wert zwischen 2 % und 7.5 % einer in Querrichtung des Sattelaufliegers bemessenen Gesamtbreite des Sattelaufliegers entspricht. Denkbar ist auch, dass die Anordnung der Antriebseinheit bzw. der elektrischen Maschine abhängig von den vom jeweiligen Sattelauflieger vorgegebenen bauräumlichen Rahmenbedingungen erfolgt. Entsprechend ist man beim Design des Sattelaufliegers unabhängiger bzw. flexibler, da das Design nicht durch eine konkrete Ausformungsgestalt der Antriebseinheit bestimmt bzw. begrenzt wird.

Besonders bevorzugt ist es vorgesehen, dass die elektrische Maschine derart im oder am Sattelauflieger angeordnet ist, dass sie unmittelbar zugänglich ist, wenn das von der elektrischen Maschine angetriebene Rad abgenommen wird. Weiterhin ist es vorstellbar, dass eine elektrische Maschine, die für den Antrieb einer Achse, d. h. zweier Räder, vorgesehen ist, in einem an das Rad angrenzenden Bereich angeordnet ist. Vorstellbar ist auch, dass in diesem Fall zum Ausgleich der Gewichtsverteilung auf der Gegenseite ein Gegengewicht im Sattelauflieger vorgesehen ist.

Erfindungsgemäß ist es vorgesehen, dass der elektrische Motor derart ausgebildet ist, dass für eine Notbremsung ein elektrischer Kurschluss, insbesondere eine Ankerkurzschlussbremsung, durchführbar ist. Durch den elektrischen Kurzschluss lässt sich ein möglichst zeitnahes Bremsen veranlassen, mit dem in vorteilhafter Weise vergleichsweise schnell auf eine Notfallsituation reagiert werden kann.

Gemäß einer weiteren Ausführungsform der vorliegenden Erfindung ist vorgesehen, dass zwischen dem angetriebenem Rad und der elektrischen Maschine ein Getriebe angeordnet ist. Durch eine möglichst große Übersetzung mittels des Getriebes lässt sich wiederum die elektrische Maschine kleiner dimensionieren, wodurch für die Antriebseinheit Bauraum, Kosten und Gewicht eingespart werden können. Insbesondere ist es vorgesehen, dass das Getriebe in die elektrische Maschine integriert ist. Dies vereinfacht nicht nur die Montage der Antriebseinheit, sondern erlaubt eine möglichst optimale Abstimmung des Getriebes mit der elektrischen Maschine. Zudem lässt sich der Bauraumbedarf für die Antriebseinheit als Gesamtheit weiter reduzieren.

Vorzugsweise ist es vorgesehen, dass das Getriebe ein Übersetzungsverhältnis zwischen 1.5 und 10, bevorzugt zwischen 10 und 25 und besonders bevorzugt zwischen 25 und 45, also eine Untersetzung aufweist. Durch das entsprechend eingestellte Übersetzungsverhältnis ist es möglich die Dimensionierung der elektrischen Maschine zu gestaltet und zu beeinflussen.

Weiterhin ist es vorgesehen, dass der Sattelauflieger eine Steuervorrichtung zur Steuerung der elektrischen Maschine und insbesondere eine Kommunikationsvorrichtung zur Kommunikation mit einer Sattelzugmaschine aufweist. Mittels der Steuervorrichtung lässt sich die elektrische Maschine in vorteilhafter Weise vom Fahrbetrieb bzw. Leerlaufbetrieb in den Bremsbetrieb überführen. Hierzu ist die Steuervorrichtung mit der elektrischen Maschine verbunden oder in die elektrische Maschine integriert. Insbesondere koordiniert die Steuervorrichtung hierbei die Stromversorgung der einzelnen Spulen der elektrischen Maschine. Über die Kommunikationsvorrichtung ist es darüber hinaus möglich, dass eine Information über einen in der Sattelzugmaschine initiierten Bremsvorgang der Steuervorrichtung mitgeteilt wird. Dabei ist es vorstellbar, dass die Kommunikation zwischen der Sattelzugmaschine und der Kommunikationsvorrichtung drahtlos oder über eine Schnittstelle, beispielsweise ein Kabel, erfolgt. Denkbar ist auch, dass die Steuervorrichtung durch die Kommunikationsvorrichtung über eine Intensität des Bremsvorgangs, d. h. ob die Bremse im der Sattelzugmaschine vergleichsweise stark oder schwach betätigt wurde, informiert wird, woraufhin die Steuervorrichtung das Bremsen durch die elektrische Maschine entsprechend anpasst. Ferner ist es vorgesehen, dass die Steuervorrichtung derart konfiguriert ist, dass sie bei einer Notbremsung den elektrischen Kurzschluss veranlasst.

Erfindungsgemäß ist es vorgesehen, dass der Sattelauflieger neben dem angetriebenen Rad ein antriebsloses Rad aufweist, wobei das antriebslose Rad vorzugsweise eine mit einem Betriebszustand der elektrischen Maschine synchronisierte Bremsvorrichtung aufweist. Dadurch lässt sich die Bremswirkung für den Sattelauflieger auf mehrere Bremsvorrichtungen verteilen. Erfindungsgemäß ist die Bremsvorrichtung eine mechanische Bremsvorrichtung z. B. eine Scheibenbremse. Insbesondere ist es vorgesehen, dass jeweils einer Achse zugeordnete und einander gegenüberliegende Räder entweder antriebslos sind oder mit elektrischem Maschinen antreibbar sind. Weiterhin ist es vorgesehen, dass die Steuervorrichtung sowohl die Bremsung durch die elektrische Maschine als auch die Bremsung durch die mechanische Bremsvorrichtung steuert. Erfindungsgemäß ist die Steuervorrichtung derart konfiguriert, dass das Bremsen durch die mechanische Bremsvorrichtung zeitverzögert gegenüber dem elektromotorischen Bremsen erfolgt. Dadurch lässt sich ein Abnutzungsgrad der mechanischen Bremsvorrichtung reduzieren, wodurch sich die Lebenszeit von andernfalls wechselbedürftigen Verschleißteilen in vorteilhafter Weise erhöht, da die Bremsbelastung für die mechanischen Bremsvorrichtung einsetzt, nachdem die elektrische Maschine bereits mit dem Bremsen begonnen hat. Beispielsweise liegt die Zeitverzögerung zur elektromotorischen Bremsung in einem Zeitintervall zwischen 0.2 s und 0.8 s, bevorzugt in einem Zeitintervall zwischen 0.4 s und 0.9 s und besonders bevorzugt in einem Zeitintervall zwischen 0.6 und 1.1 s. Erfindungsgemäß ist die Steuervorrichtung derart konfiguriert, dass die mechanische Bremsvorrichtung betätigt wird, wenn die Intensität des in der Sattelzugmaschine vorgenommenen Bremsvorgangs einen Schwellenwert überschreitet. In einem solchen Fall wirken die mechanischen Bremsvorrichtungen als Unterstützung bei einem intensiven Bremsvorgang und wird bei Bremsvorgängen unterhalb des Schwellenwerts geschont.

Insbesondere ist es vorgesehen, dass die Betätigung der Bremsvorrichtung der antriebslosen Räder bzw. Achsen mittels der Steuervorrichtung abgestimmt ist mit der Betätigung der elektrischen Maschine. Dadurch ist es in vorteilhafter Weise möglich, die Bremsvorrichtung, insbesondere die mechanische Bremsvorrichtung, im Bedarfsfall zuzuschalten. Weiterhin ist es vorgesehen, dass ein Anteil eines Bremsumfangs durch die elektrische Maschine größer ist als der jeweilige Anteil oder die summierten Anteile eines Bremsumfangs durch die Bremsvorrichtungen an den antriebslosen Rädern bzw. Achsen. Vorzugsweise nimmt ein Anteil des Bremsumfangs durch die eine oder die mehreren Bremsvorrichtungen zum Anteil des Bremsumfangs durch die elektrische Maschine einen Wert zwischen 0,1 und 0,4, bevorzugt zwischen 0,05 und 0,25 und besonders bevorzugt zwischen 0,05 und 0,1 an. Weiterhin ist es vorstellbar, dass sich der Anteil des Bremsumfangs durch die eine oder die mehreren Bremsvorrichtungen, insbesondere an den antriebslosen Rädern, zu dem Anteil des Bremsumfangs durch die elektrische Maschine während des Bremsens ändert. Dabei nimmt vorzugsweise der Anteil des Bremsumfangs durch die eine oder die mehreren Bremsvorrichtungen, insbesondere der mechanischen Bremsvorrichtungen, mit der Zeit während des Bremsens zu. Dadurch werden die mechanischen Bremsvorrichtungen erst bei einem langen, d. h. intensiven, Bremsvorgang entsprechend höher belastet, als bei einem kurzen Bremsen.

Gemäß einer weiteren Ausführungsform der vorliegenden Erfindung ist vorgesehen, dass das antriebslose Rad eine ausschließlich bei einer Notbremsung betreibbare und/oder zur Feststellung vorgesehene Bremsvorrichtung umfasst. Dadurch lässt sich der Verschleiß der verschleißanfälligen mechanischen Bremsvorrichtungen in vorteilhafter Weise weiter reduzieren. Der Fachmann versteht hierbei insbesondere unter einer Notbremsung eine Betätigung der Bremsvorrichtung mit einer Intensität, die oberhalb eines festgelegten Schwellenwerts liegt. Dabei ist eine zur Feststellung vorgesehene Bremsvorrichtung dafür vorgesehen, in einem Parkbetrieb des Sattelaufliegers das Rad zu blockieren, um damit ein unbeabsichtigtes Wegrollen des Sattelaufliegers - beispielsweise in einer Situation, in der der Sattelauflieger auf einem geneigten Untergrund platziert ist - zu unterbinden.

In einer weiteren Ausführungsform der vorliegenden Erfindung ist vorgesehen, die Steuervorrichtung derart gestaltet ist, dass sie zur Stabilisierung eines den Sattelauflieger und die Sattelzugmaschine umfassenden Sattelzugs ein oder mehrere Räder abremst. Hierbei ist es insbesondere vorgesehen, dass durch ein gezieltes, vorzugsweise automatisch erfolgendes, Bremsen mit der elektrischen Maschine beim Fahren einer Schlingerbewegung des Sattelaufliegers entgegenwirkt wird. Eine Schlingerbewegung ist insbesondere Resultat eines Querversatzes einer Achse der Sattelzugmaschine zu einer Achse des Sattelaufliegers in einer senkrecht zur Fahrtrichtung verlaufenden Richtung. Unter Stabilisierung des Sattelaufligers ist dann zu verstehen, dass diesem Querversatz entgegengewirkt wird. Vorzugsweise ist das Steuergerät derart ausgestaltet, dass das Verhältnis zwischen Querversatz und einer in Querrichtung des Sattelaufliegers bemessenen Gesamtbreite des Sattelaufliegers maximal einen Wert zwischen 2 % und 10 %, bevorzugt zwischen 6 % und 10 % und besonders bevorzugt zwischen 2 % und 5 % annimmt.

Ein weiterer Gegenstand der vorliegenden Erfindung ist ein Sattelzug umfassend eine Sattelzugmaschine und einen erfindungsgemäßen Sattelauflieger. Alle für den erfindungsgemäßen Sattelauflieger beschriebenen Merkmale und deren Vorteile lassen sich sinngemäß ebenfalls auf den erfindungsgemäßen Sattelzug übertragen und andersherum.

Weiterhin wird die Aufgabe durch ein Verfahren zum Bremsen eines erfindungsgemäßen Sattelaufliegers gelöst, wobei die elektrische Maschine zum Bremsen des Rads als elektromotorische Bremse betrieben wird. Alle für den erfindungsgemäßen Sattelauflieger beschriebenen Merkmale und deren Vorteile lassen sich sinngemäß ebenfalls auf das erfindungsgemäße Verfahren übertragen und andersherum.

Gemäß einer weiteren Ausführungsform der vorliegenden Erfindung ist vorgesehen, dass die als Synchronmaschine oder als Asynchronmaschine ausgestaltete elektrische Maschine zum Bremsen in den Generatorbetrieb überführt wird.

Weitere Vorteile und Merkmale ergeben sich aus der nachfolgenden Beschreibung bevorzugter Ausführungsformen des erfindungsgemäßen Gegenstands mit Bezug auf die beigefügte Figur. Einzelne Merkmale der einzelnen Ausführungsform können dabei im Rahmen der Erfindung miteinander kombiniert werden.

Es zeigt:

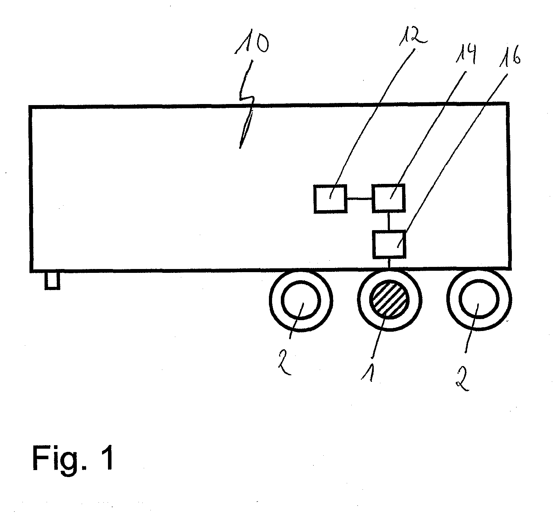

- **Fig.1:**: einen Sattelauflieger gemäß einer bevorzugten Ausführungsform der vorliegenden Erfindung

In **Fig. 1** ist schematisch ein Sattellaufleger 10 gemäß einer bevorzugten Ausführungsform der vorliegenden Erfindung dargestellt. Insbesondere bildet der Sattelauflieger 10 zusammen mit einer Sattelzugmaschine einen Sattelzug. Hierbei ist es vorgesehen, dass der Sattelzug neben einem in der Sattelzugmaschine integrierten Antrieb durch eine in den Sattelauflieger 10 integrierte elektrische Maschine 16 im Fahrbetrieb zur Bewegung angetrieben wird. Vorzugsweise ist es hierbei vorgesehen, dass die elektrische Maschine 16 zum radindividuellen Antrieb vorgesehen ist, d. h. eine elektrische Maschine 16 genau einem Rad zugeordnet ist. Denkbar ist auch, dass eine elektrische Maschine16 zum Antrieb zweier über eine Achse verbundener Räder 1, insbesondere über eine Achse mit Differentialgetriebe verbundener Räder, vorgesehen ist. Beispielsweise ist die elektrische Maschine 16 eine Asynchronmaschine oder eine Synchronmaschine. In der dargestellten Ausführungsform weist der Sattelauflieger 10 drei Achsen auf, wobei ein Rad 1 der mittleren Achse durch eine elektrische Maschine 16, vorzugsweise bedarfsweise, antreibbar ist und die bei einer Vorwärtsfahrt in Fahrrichtung gesehen vor und hinter der mittleren Achse angeordneten Achsen antriebslose Räder 2 aufweisen.

Hierbei ist es vorgesehen, dass die elektrische Maschine 16 derart konfiguriert ist, dass sie zum Bremsen als elektromotorische Bremse betreibbar ist. D. h. die im Fahrbetrieb als Synchronmaschine oder Asynchronmaschine betriebene elektrische Maschine 1 wird zum Bremsen in einen Generatorbetrieb überführt. Vorzugsweise ist es hierbei vorgesehen, dass die im Generatorbetrieb gewonnene Energie in einen Energiespeicher des Sattelaufliegers 10 rückgeführt, d. h. die elektrische Maschine wird im Bremszustand als Rekuperationsbremse verwendet. Neben der Energierückgewinnung erweist es sich zudem als vorteilhaft, dass am vom der elektrischen Maschine 16 im Fahrtbetrieb angetriebenen Rad 1 keine eigene Bremsvorrichtung, wie z. B. eine Scheibenbremse, erforderlich ist. Ohne Bremsvorrichtung, insbesondere mechanische Bremsvorrichtung, bedarf es auch keiner Demontage der elektrischen Maschine 16, die andernfalls zum Austauschen von Verschleißteilen, wie z. B. einer Bremsschreibe, notwendig wäre. Weiterhin ist es insbesondere vorgesehen, dass der Sattelauflieger 10 eine Steuervorrichtung 14 zur Steuerung der elektrischen Maschine 16 umfasst. Insbesondere ist die Steuervorrichtung 14 derart ausgestaltet, dass sie die elektrische Maschine 16 von einem Fahrbetrieb in einen Bremsbetrieb überführt. Hierzu ist die Steuervorrichtung 14 vorzugsweise mit der elektrischen Maschine 16 verbunden oder in die elektrische Maschine 16 integriert. Weiterhin ist die Steuervorrichtung 14 mit einer Kommunikationsvorrichtung 14 zur Kommunikation mit der Sattelzugmaschine verbunden. Dadurch lässt sich ein Bremsen mit der elektrischen Maschine 16 mit einem in der Sattelzugmaschine initiierten Bremsvorgang koordinieren bzw. synchronisieren. Hierbei ist es vorstellbar, dass die Kommunikation zwischen der Sattelzugmaschine und der Kommunikationsvorrichtung über eine drahtlose Funkverbindung oder eine Kabelverbindung erfolgt.

Weiterhin ist es vorgesehen, dass die antriebslosen Räder 2 Bremsvorrichtungen, wie z. B. Scheibenbremsen umfassen, die so konfiguriert sind, dass sie ausschließlich im Falle einer Notbremsung und/oder beim Feststellen des Rads in einer Parksituation betreibbar sind. D. h. im normalen Fahrbetrieb, erfolgt ein Bremsvorgang im Sattelauflieger 10 bevorzugt ausschließlich über die als elektromotorische Bremse betriebene elektrische Maschine 16. Dadurch lässt sich ein Abnutzungsgrad der mechanisch ausgestalteten Bremsvorrichtung der antriebslosen Räder in vorteilhafter Weise reduzieren. Beispielsweise wird hierdurch ein Verschleißvolumen der Reibpartner reduziert und/oder es kann auf eine zur Kühlung vorgesehene Innenbelüftung verzichtet werden. Dies erweist sich sowohl vorteilhaft für den Bauraum als auch in Hinblick auf einen Materialbedarf bei der Herstellung und Instandsetzung der für den Sattelauflieger 10 vorgesehenen Bremsvorrichtung 16. Erfindungsgemäß sind die Bremsvorrichtungen der antriebslosen Räder 2 ebenfalls mit der Steuervorrichtung 14 verbunden, wodurch eine Betätigung der mechanischen Bremsvorrichtung situationsbedingt veranlasst werden kann.

Darüber hinaus ist es vorgesehen, dass zwischen dem angetriebenen Rad 1 und der elektrischen Maschine 16 ein Getriebe zur Realisierung eines möglichst großen Übersetzungsverhältnisses angeordnet ist. Vorzugsweise weist das Getriebe ein Übersetzungsverhältnis zwischen 1.5 und 3, bevorzugt zwischen 1.8 und 3.5 und besonders bevorzugt zwischen 2 und 4 auf.

Weiterhin ist es vorgesehen, dass ein Abstand zwischen dem angetriebenen Rad 1 und der elektrischen Maschine im Wesentlichen einem Wert zwischen 2% und 40 %, bevorzugt einem Wert zwischen 5 % und 15 % und besonders bevorzugt einen Wert zwischen 2 % und 10 % einer in Querrichtung des Sattelaufliegers bemessenen Gesamtbreite des Sattelaufliegers 10 entspricht. Da auf eine mechanische Bremsvorrichtung verzichtet werden kann, lässt sich die elektrische Maschine vergleichsweise nah am Rad anordnen, wodurch das Gesamtsystem aus Rad und elektrischer Maschine möglichst wenig Bauraum in Anspruch nimmt. Ferner ist es vorstellbar, dass das angetriebene Rad 1 in Fahrtrichtung gesehen im letzten Drittel oder letzten Viertel des Sattelaufliegers angeordnet ist.

### Bezugszeichenliste

- 1: Rad
- 2: Antriebsloses Rad
- 10: Sattelauflieger
- 12: Kommunikationsvorrichtung
- 14: Steuervorrichtung
- 16: elektrische Maschine

## Patentansprüche

1. Sattelauflieger (10), insbesondere für ein Nutzfahrzeug, umfassend
ein Rad (1) und
eine elektrische Maschine (16) zum Antrieb des Rads (1),
wobei die elektrische Maschine (16) derart konfiguriert ist, dass sie in einem Bremszustand als elektromotorische Bremse betreibbar ist,
wobei der Sattelauflieger (10) neben dem Rad (1) ein antriebsloses Rad (2) aufweist,
wobei das antriebslose Rad (2) eine mechanische Bremsvorrichtung aufweist,
weiter umfassend eine Steuervorrichtung (14), die dazu ausgelegt ist, mit einer Sattelzugmaschine zu kommunizieren und zur Steuerung der elektrischen Maschine (16) sowie der mechanischen Bremsvorrichtung,
wobei das Bremsen durch die mechanische Bremsvorrichtung zeitverzögert gegenüber dem elektromotorischen Bremsen erfolgt,
wenn eine Intensität des in einer Sattelzugmaschine vorgenommenen Bremsvorgangs unterhalb eines festgelegten Schwellenwerts liegt,
und wobei das Bremsen durch die mechanische Bremsvorrichtung zusammen mit dem elektromotorischen Bremsen erfolgt,
wenn die Intensität des in der Sattelzugmaschine vorgenommenen Bremsvorgangs oberhalb des festgelegten Schwellenwerts liegt,
und wobei ausschließlich die elektrische Maschine als Bremsvorrichtung für das Rad wirkt,
wobei die elektrische Maschine derart ausgebildet ist, dass für eine Notbremsung eine Ankerkurzschlussbremsung durchführbar ist,
wenn die Betätigung der Bremsvorrichtung mit einer Intensität vorliegt, die oberhalb des festgelegten Schwellenwerts liegt.

2. Sattelauflieger (10) gemäß Anspruch 1, wobei die elektrische Maschine (16) eine Asynchronmaschine oder eine Synchronmaschine ist.

3. Sattelauflieger (10) gemäß einem der vorhergehenden Ansprüche, wobei die elektrische Maschine (16) im Bremszustand als Rekuperationsbremse wirkt bzw. betreibbar ist.

4. Sattelaufleger (10) gemäß einem der vorhergehenden Ansprüche, wobei die elektrische Maschine (16) an das Rad (1) angrenzt oder eine Achse mit zwei Rädern (1) antreibt.

5. Sattelauflieger (10) gemäß einem der vorhergehenden Ansprüche, wobei zwischen dem angetriebenen Rad (1) und der elektrischen Maschine (16) ein Getriebe angeordnet ist.

6. Sattelauflieger (10) gemäß einem der vorhergehenden Ansprüche, wobei ein antriebsloses Rad (2) eine ausschließlich bei einer Notbremsung betreibbare und/oder
zur Feststellung vorgesehene Bremsvorrichtung umfasst.

7. Sattelzug umfassend eine Sattelzugmaschine und einen Sattelauflieger (10) gemäß einem der vorhergehenden Ansprüche.

## Claims

1. A semitrailer (10), in particular for a utility vehicle, comprising
a wheel (1) and
an electric machine (16) for driving the wheel (1),
wherein the electric machine (16) is configured so as to be operable as an electromotive brake in a braking state,
wherein the semitrailer (10) has a non-driven wheel (2) in addition to the driven wheel (1),
wherein the non-driven wheel (2) has a mechanical brake device,
further comprising a control device (14) adapted to communicate with a semitrailer tractor and to control the electric machine (16) and the mechanical brake device,
wherein the braking by means of the mechanical brake device is performed with a time delay in relation to the electromotive braking
when an intensity of braking performed in a semitrailer tractor lies below a set threshold value,
and wherein braking by the mechanical brake device is performed together with the electromotive braking
when the intensity of braking performed in the semitrailer tractor lies above the set threshold,
and wherein exclusively the electric machine acts as a brake device for the wheel,
wherein the electric machine is designed such that, for emergency braking, an armature short-circuit braking can be performed
when the actuation of the brake device is present with an intensity that lies above the set threshold value.

2. The semitrailer (10) as claimed in claim 1, wherein the electric machine (16) is an asynchronous machine or a synchronous machine.

3. The semitrailer (10) as claimed in any of the preceding claims, wherein the electric machine (16) acts or is operable as a recuperation brake in the braking state.

4. The semitrailer (10) as claimed in any of the preceding claims, wherein the electric machine (16) is adjacent to the wheel (1) or drives an axle with two wheels (1).

5. The semitrailer (10) as claimed in any of the preceding claims, wherein a transmission is arranged between the driven wheel (1) and the electric machine (16).

6. The semitrailer (10) as claimed in any of the preceding claims, wherein a non-driven wheel (2) comprises a brake device which is operable exclusively during emergency braking and/or which is provided for immobilization.

7. A semitrailer truck comprising a semitrailer tractor and a semitrailer (10) as claimed in any of the preceding claims.

## Revendications

1. Semi-remorque (10), en particulier pour un véhicule utilitaire, comprenant
une roue (1), et
une machine électrique (16) pour entraîner la roue (1),
dans laquelle
la machine électrique (16) est configurée de manière à pouvoir fonctionner comme un frein moteur électrique dans un état de freinage,
la semi-remorque (10) comprend, en plus de la roue (1), une roue sans entraînement (2),
la roue sans entraînement (2) comprend un dispositif de freinage mécanique,
comprenant en outre un dispositif de commande (14) qui est conçu pour communiquer avec un tracteur de semi-remorque et pour commander la machine électrique (16) et le dispositif de freinage mécanique,
le freinage par le dispositif de freinage mécanique étant retardé par rapport à celui du frein moteur électrique, lorsqu'une intensité de l'opération de freinage exécutée dans un tracteur de semi-remorque est inférieure à une valeur seul définie, et
le freinage par le dispositif de freinage mécanique s'effectue conjointement avec celui du frein moteur électrique, lorsque l'intensité de l'opération de freinage exécutée dans le tracteur de semi-remorque est supérieure à une valeur seul définie, et
exclusivement la machine électrique agit comme dispositif de freinage pour la roue,
la machine électrique est réalisée de telle sorte qu'un freinage par courtcircuit d'induit peut s'effectuer pour un freinage d'urgence, lorsque l'actionnement du dispositif de freinage se présente avec une intensité qui est supérieure à la valeur seuil définie.

2. Semi-remorque (10) selon la revendication 1,
dans laquelle la machine électrique (16) est une machine asynchrone ou une machine synchrone.

3. Semi-remorque (10) selon l'une des revendications précédentes,
dans laquelle la machine électrique (16) est configurée pour agir ou pouvoir fonctionner comme un frein régénératif dans l'état de freinage.

4. Semi-remorque (10) selon l'une des revendications précédentes,
dans laquelle la machine électrique (16) est adjacente à la roue (1) ou entraîne un essieu à deux roues (1).

5. Semi-remorque (10) selon l'une des revendications précédentes,
dans laquelle un mécanisme est disposé entre la roue motrice (1) et la machine électrique (16).

6. Semi-remorque (10) selon l'une des revendications précédentes,
dans laquelle une roue sans entraînement (2) comprend un dispositif de freinage qui peut fonctionner exclusivement en cas de freinage d'urgence et/ou qui est prévu pour le stationnement.

7. Ensemble semi-remorque comprenant un tracteur de semi-remorque et une semi-remorque (10) selon l'une des revendications précédentes.
